# EUROPEAN PATENT APPLICATION

(11) **EP 4 648 118 A1**
(43) Date of publication of application: **12.11.2025**
(21) Application number: 23931793.6
(22) Date of filing: 17.11.2023
(51) Int. Cl.: H01M 4/13, H01M 4/139, H01G 11/24

(54) **BATTERY ELECTRODE SHEET AND MANUFACTURING METHOD THEREFOR, BATTERY, AND ELECTRICAL APPARATUS**

(30) Priority: 04.04.2023 CN 202310354114
(71) Applicant: Contemporary Amperex Technology Co., Limited, Ningde, Fujian 352100 (CN)
(72) Inventor: WU, Longsheng, Ningde, Fujian 352100 (CN); LI, Xuan, Ningde, Fujian 352100 (CN); CHEN, Xingbu, Ningde, Fujian 352100 (CN); SUN, Xin, Ningde, Fujian 352100 (CN); YE, Yonghuang, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2023/132352
(87) International publication number: WO 2024/207747

(57) **Abstract**

The present application relates to a battery electrode sheet and a manufacturing method therefor, a battery, and an electrical apparatus. The battery electrode sheet comprises a current collector and an active layer provided on the surface of the current collector; the component of the active layer comprises an active material; and the volume average particle size of the active material is D, the surface roughness Ra of the current collector is greater than or equal to 0.5 µm, and the following relation is satisfied: Ra/D ≥ 0.15.

## Description

### CROSS-REFERENCE

The present application refers to Chinese Patent Application No. 202310354114.5, entitled "BATTERY ELECTRODE SHEET AND MANUFACTURING METHOD THEREFOR, BATTERY, AND ELECTRICAL APPARATUS", filed on April 04, 2023, which is incorporated herein by reference in its entirety.

### TECHNICAL FIELD

The present application relates to the technical field of batteries, and in particular, to a battery electrode plate and a preparation method therefor, a battery, and an electric device.

### BACKGROUND

In recent years, secondary batteries have been widely used in the fields of smart phones, tablet computers, smart wearables, electric tools, electric vehicles, and the like. With the widespread application of batteries, the performance demands of consumers on batteries are increasing.

With the increase of the demands, the performance of conventional secondary batteries is becoming increasingly difficult to meet the demands of people and requires further improvement.

### SUMMARY

According to various embodiments of the present application, the present application provides a battery electrode plate and a preparation method therefor, a battery, and an electric device, aiming at improving the adhesion of the electrode plate and further prolonging the cycle service life of the battery.

The present application is realized by the following technical solutions.

A first aspect of the present application provides a battery electrode plate including a current collector and an active layer disposed on the surface of the current collector. Components of the active layer include an active material, a volume average particle size of the active material is D µm, a surface roughness Ra of the current collector is greater than or equal to 0.5 µm, and a relationship of Ra/D ≥ 0.15 is satisfied.

In the battery electrode plate described above, the surface roughness of the current collector is regulated to create a certain uneven surface structure, and the volume average particle size of the active material is adjusted in coordination with the surface roughness to satisfy a certain relationship between the two, such that a mechanical interlocking effect is produced between the surface of the current collector and active substances in the active layer, and thus the adhesive force of the battery electrode plate is enhanced, and the probability that the active layer is separated from the surface of the current collector during the charging and discharging processes of the electrode plate is reduced, thereby improving the cycle performance of the battery.

In some embodiments, 0.15 ≤ Ra/D ≤ 1;
optionally, 0.2 ≤ Ra/D ≤ 1.

By further regulating the proportional relationship between the surface roughness of the current collector and the volume average particle size of the active material, the adhesive force of the battery electrode plate is further enhanced.

In some embodiments, Ra satisfies a relationship of 0.5 µm ≤ Ra ≤ 3 µm;
optionally, Ra satisfies a relationship of 1.5 µm ≤ Ra ≤ 3 µm.

By further regulating the surface roughness of the current collector, good strength of the current collector is maintained while an excellent mechanical interlocking effect between the surface of the current collector and the active substances in the active layer is ensured, thereby further improving the stability of the battery electrode plate.

In some embodiments, D satisfies a relationship of 2 ≤ D ≤ 20;
optionally, 3 ≤ D ≤ 15.

By further regulating the particle size of the active substances, good interaction with the current collector is maintained while good dispersibility is ensured.

In some embodiments, the battery electrode plate is a negative electrode plate, and the active material includes at least one of a silicon-based active material and a carbon-based active material.

The battery electrode plate satisfies any one of the following conditions (1) to (3):
(1) the active material is a carbon-based active material, and Ra/D satisfies a relationship of 0.15 ≤ Ra/D ≤ 0.4;
optionally, the active material is a carbon-based active material, and Ra/D satisfies a relationship of 0.2 ≤ Ra/D ≤ 0.4;
(2) the active material is a silicon-based active material, and Ra/D satisfies a relationship of 0.3 ≤ Ra/D ≤ 1;
optionally, the active material is a silicon-based active material, and Ra/D satisfies a relationship of 0.5 ≤ Ra/D ≤ 1;
(3) the active material includes a carbon-based active material and a carbon-based material, and Ra/D satisfies a relationship of 0.4 ≤ Ra/D ≤ 1.

The research has found that the volume expansion degree trends of different types of negative electrode active materials during the charging and discharging processes are not exactly the same. By further adjusting the proportional relationship between the current collector and the volume average particle sizes of different types of negative electrode active materials, the overall adhesive force and mechanical strength of the electrode plate can be better enhanced, which ensures that the electrode plate maintains good electrical contact with the current collector during the charging and discharging processes, thereby further improving the overall cycle stability of the electrode plate.

In some embodiments, the active layer is in direct contact with the surface of the current collector.

In some embodiments, the active layer satisfies at least one of the following conditions (1) to (3):
(1) in the active layer, a mass proportion of the active material is 80% to 95%;
(3) the components of the active layer further include a conductive agent;
optionally, in the active layer, a mass proportion of the conductive agent is 2% to 10%;
(3) the components of the active layer further include a binder;
optionally, in the active layer, a mass proportion of the binder is 2% to 10%.

In some embodiments, a tensile strength of the current collector is greater than 350 MPa;
optionally, a tensile strength of the current collector is 360 MPa to 450 MPa.

A second aspect of the present application provides a preparation method for a battery electrode plate, which includes the following steps:
providing a current collector and an active slurry, where components of the active slurry include an active material, a volume average particle size of the active material is D µm, a surface roughness Ra of the current collector is greater than or equal to 0.5 µm, and a relationship of Ra/D ≥ 0.15 is satisfied; and
coating a surface of the current collector with the active slurry to prepare the battery electrode plate.

In some embodiments, the preparation method for the current collector includes the following steps:
performing roughening treatment on a current collector matrix to prepare the current collector;
optionally, the roughening treatment is performed by any one of an electrodeposition method, an etching method, or a dealloying method.

A third aspect of the present application provides a battery. The battery includes the battery electrode plate according to the first aspect or a battery electrode plate prepared by the preparation method for a battery electrode plate according to the second aspect.

A fourth aspect of the present application provides an electric device including the battery according to the third aspect.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts. In the drawings:
FIG. 1 is a schematic diagram of an embodiment of a battery;
FIG. 2 is an exploded view of FIG. 1;
FIG. 3 is a schematic diagram of an embodiment of a battery pack;
FIG. 4 is an exploded view of FIG. 3;
FIG. 5 is a schematic diagram of an embodiment of an electric device in which a battery is used as a power source.

### Description of the reference numerals:

1, battery pack; 2, upper case body; 3, lower case body; 4, battery; 41, housing; 42, electrode assembly; 43, cover plate; and 5, electric device.

### DETAILED DESCRIPTION

The present application will be described in detail with reference to the following embodiments in order to make the above objects, features and advantages of the present application more comprehensible. In the following description, numerous specific details are set forth in order to provide a thorough understanding of the present application. However, the present application can be implemented in many other ways different from those described herein, and similar improvements can be made by those skilled in the art without departing from the spirit of the present application, such that the present application is not limited to the specific embodiments disclosed below.

In the present application, unless otherwise clearly specified and defined, the technical terms "mount", "interconnect", "connect", "fix", and the like should be interpreted in their broad senses, and may be, for example, fixed connection, detachable connection, or integrated connection; mechanical connection or electrical connection; or direct connection or indirect connection via an intermediate, or internal communication between two elements or interaction between two elements. For those of ordinary skill in the art, the specific meanings of the aforementioned terms in the present application can be understood according to specific conditions.

In addition, the terms "first" and "second" are used for description only and are not to be construed as indicating or implying relative importance or to implicitly indicate the number of technical features indicated. Thus, a feature defined by "first" or "second" may explicitly or implicitly show that at least one such feature is included. In the description of the present application, "plurality" means at least two, e.g., two, three, etc., unless otherwise explicitly and specifically defined.

Unless otherwise defined, all technical and scientific terms used herein have the same meaning as commonly understood by those skilled in the art to which the present application belongs. The terms used in the specification of the present application herein are only for describing the specific embodiments, rather than limiting the present application. As used herein, the term "and/or" includes any and all combinations of one or a plurality of the associated listed items.

In view of the foregoing background, the performance of conventional secondary batteries is becoming increasingly difficult to meet the demands of people. In order to improve the performance of batteries, such as energy density and lifespan, in the conventional technology, the main approaches are to improve the active materials, for example, to use a silicon-based active material, or increase the loading amount of the active materials.

However, research has found that during the charging and discharging processes of batteries, the active layers on these conventional electrode plates are prone to peeling off, which in turn negatively affects the battery performance.

Based on this, after a great deal of creative research, the battery electrode plate of the present application is obtained, which can improve the adhesion of the electrode plate, and further improve the cycle service life of the battery.

An embodiment of the present application provides a battery electrode plate including a current collector and an active layer disposed on the surface of the current collector. Components of the active layer include an active material, a volume average particle size of the active materials is D µm, surface roughness Ra of the current collector is greater than or equal to 0.5 µm, and a relationship of Ra/D ≥ 0.15 is satisfied.

In the battery electrode plate described above, the surface roughness of the current collector is regulated to create a certain uneven surface structure, and the volume average particle size of the active material is adjusted in coordination with the surface roughness to satisfy a certain relationship between the two, such that a mechanical interlocking effect is produced between the surface of the current collector and active substances in the active layer, and thus the adhesive force of the battery electrode plate is enhanced, and the probability that the active layer is separated from the surface of the current collector during the charging and discharging processes of the electrode plate is reduced, thereby improving the cycle performance of the battery.

The surface roughness is a common means of characterizing microscopic unevenness, with greater surface roughness indicating greater unevenness.

The surface roughness may be tested using test methods conventional in the art for testing surface roughness, including but not limited to a method performed according to the standard GB/T 2523-2022.

In the technical solutions of the present application, the volume average particle size of the active material may be directly based on the volume average particle size of the active material used during the preparation, or the active layer in the electrode plate may be disassembled to separate the active material from other components, and then the volume average particle size of the active material is tested. For example, when the battery electrode plate is a negative electrode plate: The negative electrode plate is soaked in water. After the coating on the electrode peels off, the copper foil is removed, and the water solution is filtered. The residue is taken and burned under an oxygen atmosphere with an acetylene flame at a temperature of 600-800 °C. The residue after burning is a negative electrode active material powder, which is taken for a particle size test.

It can be understood that the active material may be regarded as a group consisting of n particles with different particle sizes and certain volumes or weights, and the weighted average particle size measured by volume is the volume average particle size. The definition and physical meaning of the volume average particle size can be found in "Representation of the Results of Particle Size Analysis - Part 2" of GB T 15445.2-2006, and the volume average particle size is also denoted as D[4,3].

The specific volume average particle size test is performed by using a laser method, specifically referring to "Particle Size Analysis - Laser Diffraction Methods" (GB/T 19077-2016/ISO 13320:2009) and using a Mastersizer 2000E laser particle size analyzer from Malvern Panalytical Ltd. (UK). The output D[4,3] is the volume average particle size.

In some embodiments, 0.15 ≤ Ra/D ≤ 1.

In some embodiments, 0.2 ≤ Ra/D ≤ 1.

By further regulating the proportional relationship between the surface roughness of the current collector and the volume average particle size of the active material, the adhesive force of the battery electrode plate is further enhanced.

In the expression "0.15 ≤ Ra/D ≤ 1" described above, the value of Ra/D includes a minimum value and a maximum value of the range and each value between the minimum value and the maximum value. Specific examples include, but are not limited to, point values in the embodiments and the following point values: 0.15, 0.2, 0.25, 0.3, 0.35, 0.4, 0.45, 0.5, 0.55, 0.6, 0.65, 0.7, 0.75, 0.8, 0.85, 0.9, 0.95, and 1; or ranges consisting of any two of the above numerical values.

In some embodiments, Ra satisfies a relationship of 0.5 µm ≤ Ra ≤ 3 µm.

In some embodiments, Ra satisfies a relationship of 1.5 µm ≤ Ra ≤ 3 µm.

By further regulating the surface roughness of the current collector, good strength of the current collector is maintained while an excellent mechanical interlocking effect between the surface of the current collector and the active substances in the active layer is ensured, thereby further improving the stability of the battery electrode plate.

In the expression "0.5 µm ≤ Ra ≤ 3 µm" described above, the value of Ra includes a minimum value and a maximum value of the range and each value between the minimum value and the maximum value. Specific examples include, but are not limited to, point values in the embodiments and the following point values: 0.5 µm, 1 µm, 1.5 µm, 2 µm, 2.5 µm, and 3 µm; or ranges consisting of any two of the above numerical values, for example, 0.5 µm to 2.5 µm, 0.5 µm to 2 µm, 0.5 µm to 1.5 µm, 1 µm to 3 µm, 1 µm to 2.5 µm, 1 µm to 2 µm, and 1 µm to 1.5 µm.

In some embodiments, D satisfies a relationship of 2 ≤ D ≤ 20.

In some embodiments, 3 ≤ D ≤ 15.

By further regulating the particle size of the active substances, good interaction with the current collector is maintained while good dispersibility is ensured.

In the expression "2 ≤ D ≤ 20", the value of D includes a minimum value and a maximum value of the range and each value between the minimum value and the maximum value. Specific examples include, but are not limited to, point values in the embodiments and the following point values: 2, 3, 4, 5, 6, 7, 8, 9, 10, 11, 12, 13, 14, 15, 16, 17, 18, 19, and 20; or ranges consisting of any two of the above numerical values, for example, 2-20, 2-19, 2-15, 2-14, 2-13, 2-12, 2-11, 2-10, 2-9, 3-20, 3-19, 3-15, 3-14, 3-13, 3-12, 3-11, 3-10, 3-9, 4-20, 4-19, 4-15, 4-14, 4-13, 4-12, 4-11, 4-10, 4-9, 5-20, 5-19, 5-15, 5-14, 5-13, 5-12, 5-11, 5-10, 5-9, 6-20, 6-19, 6-15, 6-14, 6-13, 6-12, 6-11, 6-10, 6-9, 7-20, 7-15, 7-12, 7-10, 8-20, 8-15, 8-12, and 8-10.

In some embodiments, the battery electrode plate described above is a negative electrode plate, and the active material described above includes at least one of a silicon-based active material and a carbon-based active material.

In some embodiments, the active material is a carbon-based active material, and Ra/D satisfies a relationship of 0.15 ≤ Ra/D ≤ 0.4.

In some embodiments, the active material is a carbon-based active material, and Ra/D satisfies a relationship of 0.2 ≤ Ra/D ≤ 0.4.

In some embodiments, the active material is a silicon-based active material, and Ra/D satisfies a relationship of 0.3 ≤ Ra/D ≤ 1.

In some embodiments, the active material is a silicon-based active material, and Ra/D satisfies a relationship of 0.5 ≤ Ra/D ≤ 1.

In some embodiments, the active material includes a carbon-based active material and a carbon-based material, and Ra/D satisfies a relationship of 0.4 ≤ Ra/D ≤ 1.

The research has found that the volume expansion degrees of different types of negative electrode active materials during the charging and discharging processes are different. By further adjusting the proportional relationship between the current collector and the volume average particle sizes of different types of negative electrode active materials, the overall adhesive force and mechanical strength of the electrode plate can be better enhanced, which ensures that the electrode plate maintains good electrical contact with the current collector during the charging and discharging processes, thereby further improving the overall cycle stability of the electrode plate.

In some embodiments, a mass proportion of the silicon-based active material in the active material is 50% to 99.9%.

In some embodiments, a mass proportion of the silicon-based active material in the active material is 50% to 80%.

The carbon-based active material described above may be a carbon-based active material commonly used in the present application, including but not limited to at least one of mesocarbon microbeads, graphite, glassy carbon, carbon nanotubes, carbon-carbon composite materials, carbon fibers, hard carbon, and soft carbon.

The silicon-based active material described above may be a silicon-based active material commonly used in the present application, including but not limited to at least one of silicon-carbon composites, nano-silicon, silicon oxide, silicon(II) oxide, and silicon-containing alloys.

In some embodiments, the active layer is in direct contact with the surface of the current collector.

In some embodiments, in the active layer, a mass proportion of the active material is 80% to 95%.

In some embodiments, the components of the active layer further include a conductive agent.

In some embodiments, a mass proportion of the conductive agent in the active layer is 2% to 10%.

In some embodiments, the components of the active layer further include a binder.

In some embodiments, in the active layer, a mass proportion of the binder is 2% to 10%.

The conductive agent described above may be a conductive material commonly used in the art, including but not limited to at least one of graphite, carbon nanotubes, nanofibers, carbon black, and graphene. Specifically, the conductive agent may be selected from at least one of SP, KS-6, acetylene black, branched Ketjen black ECP, SFG-6, vapor grown carbon fiber VGCF, carbon nanotubes CNTs, graphene, and a composite conductive agent thereof.

The binder described above may be a binder commonly used in the art, and may be selected from at least one of polyvinylidene difluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, hydrogenated nitrile-butadiene rubber, styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS), and fluorinated acrylate resin.

In some embodiments, a thickness of the active layer is 25 µm to 133 µm.

In some embodiments, a thickness of the active layer is 25 µm to 120 µm.

In the expression "25 µm to 133 µm" described above, the thickness of the active layer includes a minimum value and a maximum value of the range and each value between the minimum value and the maximum value. Specific examples include, but are not limited to, point values in the embodiments and the following point values: 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 132 µm, and 133 µm; or ranges consisting of any two of the above numerical values, for example, 30 µm to 133 µm, 30 µm to 120 µm, 30 µm to 110 µm, 30 µm to 100 µm, 30 µm to 90 µm, 30 µm to 80 µm, 30 µm to 70 µm, 30 µm to 60 µm, 30 µm to 50 µm, 40 µm to 100 µm, 40 µm to 90 µm, 40 µm to 80 µm, 40 µm to 70 µm, 40 µm to 60 µm, 40 µm to 50 µm, 50 µm to 100 µm, 50 µm to 90 µm, 50 µm to 80 µm, 50 µm to 70 µm, and 50 µm to 60 µm.

In some embodiments, a tensile strength of the current collector is greater than 350 MPa.

Optionally, a tensile strength of the current collector is 360 MPa to 450 MPa.

In some embodiments, a thickness of the current collector is 6 µm to 20 µm.

In some embodiments, a thickness of the current collector is 6 µm to 10 µm.

In some embodiments, the current collector may be a metal foil or a composite current collector. For example, as the metal foil, a copper foil or an aluminum foil may be used. The composite current collector may include a polymer material substrate and a metal layer formed on at least one surface of the polymer material substrate. The composite current collector may be formed by forming a metal material on a polymer material substrate.

In some embodiments, the metal material includes at least one of aluminum, an aluminum alloy, nickel, a nickel alloy, titanium, a titanium alloy, silver, and a silver alloy.

In some embodiments, the polymer material substrate includes at least one of polypropylene (PP), polyethylene terephthalate (PET), polybutylene terephthalate (PBT), polystyrene (PS), and polyethylene (PE).

Another embodiment of the present application provides a preparation method for the battery electrode plate, which includes the following steps S10-S20.

S10, a current collector and an active slurry are provided, where components of the active slurry include an active material, an average particle size of the active material is D µm, a surface roughness Ra of the current collector is greater than or equal to 0.5 µm, and a relationship of Ra/D ≥ 0.15 is satisfied.

S20, a surface of the current collector is coated with the active slurry to prepare the battery electrode plate.

The parameter meanings and ranges of the active material, Ra, and D are the same as those described above, which will not be described herein again.

In some embodiments, the preparation method for the current collector described above includes the following steps:
performing roughening treatment on a current collector matrix to prepare a current collector.

Optionally, the roughening treatment is performed by any one of an electrodeposition method, an etching method, or a dealloying method. The method of roughening treatment is briefly described herein, and includes, but is not limited to, the following methods.

The electrodeposition method: The current collector matrix is electroplated by using an electrolytic solution. The electrolytic solution contains metal ions corresponding to the current collector matrix material, and spherical metal particles with uniform distribution and strong bonding are formed on the current collector matrix during the electroplating process, such that the surface roughness of the current collector is increased. For example, in the case of copper foil, CuSO₄ is used as the main salt of the electrolytic solution, which is the source of Cu²⁺ in the solution, and spherical metal copper particles with uniform distribution and strong bonding are formed on the surface of the copper foil by electroplating.

Further, the size and distribution of the formed copper particles can be regulated by adjusting the concentration of Cu²⁺, the current intensity during electroplating, the time, the pH of the electrolytic solution, and the type and concentration of additives, such that the surface roughness of the prepared current collector is regulated.

The etching method: The method includes physical etching and chemical etching. The physical etching is also referred to as sputtering etching, which has strong directivity and can realize anisotropic etching. For example, gases such as Ar are dissociated into positively charged ions by glow discharge, the self-bias of a lower electrode can attract positive ions in plasma to bombard the surface of a current collector matrix to form a concave-convex structure, thereby achieving the purpose of etching. The chemical etching involves a chemical reaction between chemically active atomic groups and a material to be etched to achieve the purpose of etching. For example, an ammonium persulfate solution and a dilute acetic acid solution are used to etch the surface of a copper foil to achieve the purpose of etching.

The dealloying method: The dealloying method is a method of selectively corroding a metal element with stronger activity by using a corrosive solution according to different activity degrees of the metal elements contained in a current collector matrix material based on a chemical or electrochemical corrosion principle, so as to leave another metal, such that the removal of the metal creates a vacancy, resulting in a concave-convex structure on the surface. For example, the more active Zn in a Cu-Zn alloy foil can be used for obtaining a nanoporous copper material by using a constant-voltage electrochemical etching dealloying method. Further, the surface roughness of the copper foil may be regulated by adjusting the content and distribution of Zn in the Cu-Zn alloy foil, and parameters such as voltage and time during etching.

In some embodiments, the coating in step S20 includes, but is not limited to, printing coating, knife coating, spin coating, or inkjet coating. The current collector is coated with the slurry, and drying, cold pressing and other processes are performed, such that the coating can be obtained.

Further, in step S20, a double-head die may be used for simultaneous coating.

In some embodiments, the battery electrode plate may be prepared by the following steps: coating the current collector with the active slurry, and performing drying, cold pressing, and other processes, such that the battery electrode plate can be obtained.

An embodiment of the present application further provides a battery, which includes the battery electrode plate described above or a battery electrode plate prepared by the preparation method for the battery electrode plate described above.

It can be understood that the battery described above includes a positive electrode plate, a negative electrode plate, a separator, and an electrolytic solution. At least one of the positive electrode plate and the negative electrode plate is the battery electrode plate described above.

In some embodiments, if the battery electrode plate described above is a negative electrode plate, the battery further includes a positive electrode plate, a separator, and an electrolytic solution, which are exemplified as follows, including but not limited to, the following.

### [Positive Electrode Plate]

The positive electrode plate includes a current collector and a positive electrode active layer disposed on the surface of the current collector, and components of the positive electrode active layer include a positive electrode active material.

As an example, the current collector in the positive electrode plate is provided with two surfaces opposite to each other in a thickness direction thereof, and the positive electrode active material is disposed on either or both of the two opposite surfaces of the positive electrode current collector.

In any embodiment of the present application, the current collector in the positive electrode plate may be a metal foil or a composite current collector. For example, as the metal foil, an aluminum foil may be used. The composite current collector may include a polymer material substrate and a metal layer formed on at least one surface of the polymer material substrate. The composite current collector may be formed by forming a metal material on a polymer material substrate.

In some embodiments, the metal material includes at least one of aluminum, an aluminum alloy, nickel, a nickel alloy, titanium, a titanium alloy, silver, and a silver alloy.

In some embodiments, the polymer material substrate includes at least one of polypropylene (PP), polyethylene terephthalate (PET), polybutylene terephthalate (PBT), polystyrene (PS), and polyethylene (PE).

The positive electrode active material described above may be a positive electrode active material commonly used in the present application, for example, a lithium ion positive electrode active material or a sodium ion positive electrode active material.

Further, as an example, the positive electrode active material may include at least one of the following materials: a lithium-containing phosphate with an olivine structure, a lithium transition metal oxide, and respective modified compounds thereof. However, the present application is not limited to these materials, and other conventional materials that may be used as positive electrode active materials for batteries may also be used. These positive electrode active materials may be used alone or in combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂, and LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM333), LiNi0.5Co0.2Mn0.3O2 (also referred to as NCM523), LiNi_{0.5}Co_{0.25}Mn_{0.25}O₂ (also referred to as NCM211), LiNi0.6Co_{0.2}Mn_{0.2}O₂ (also referred to as NCM622), LiNi_{0.8}Co_{0.1}Mn_{0.1}O₂ (also referred to as NCM811)), a lithium nickel cobalt aluminum oxide (such as LiNi_{0.85}Co_{0.15}Al_{0.05}O₂), and modified compounds thereof. Examples of the lithium-containing phosphate with an olivine structure may include, but are not limited to, at least one of a lithium iron phosphate (such as LiFePO₄ (also referred to as LFP)), a lithium manganese phosphate (such as LiMnPO₄), and a lithium manganese iron phosphate.

In any embodiment of the present application, the molecular formula of the lithium ion active material is LiFeₓMn₍₁₋ₓ₎PO₄, where x is any number of 0 to 1.

It can be understood that when x is 0, LiFeₓMn₍₁₋ₓ₎PO₄ is LiMnPO₄ lithium manganese phosphate, and when x is 1, LiFeₓMn₍₁₋ₓ₎PO₄ is LiFePO₄ lithium iron phosphate (LFP).

As an example, the sodium ion active material may include at least one of the following materials: at least one of a sodium transition metal oxide, a polyanionic compound, and a Prussian blue compound. However, the present application is not limited to these materials, and other conventional and well-known materials that can be used as positive electrode active materials for sodium-ion batteries may also be used.

As an optional technical solution of the present application, in the sodium transition metal oxide, the transition metal at least includes at least one of Mn, Fe, Ni, Co, Cr, Cu, Ti, Zn, V, Zr, and Ce. The sodium transition metal oxide is, for example, NaxMO₂, where M includes one or more of Ti, V, Mn, Co, Ni, Fe, Cr, and Cu, and 0 < x ≤ 1.

As an optional technical solution of the present application, the polyanionic compound may be a class of compounds having sodium ions, transition metal ions, and tetrahedral (YO₄)ⁿ⁻ anion units. The transition metal at least includes at least one of Mn, Fe, Ni, Co, Cr, Cu, Ti, Zn, V, Zr, and Ce; Y at least includes at least one of P, S, and Si; n represents the valence state of (YO₄)ⁿ⁻.

The polyanionic compound may also be a class of compounds having sodium ions, transition metal ions, tetrahedral (YO4)n- anion units, and halogen anions. The transition metal at least includes at least one of Mn, Fe, Ni, Co, Cr, Cu, Ti, Zn, V, Zr, and Ce; Y at least includes at least one of P, S, and Si, and n represents the valence state of (YO₄)ⁿ⁻; the halogen may be at least one of F, Cl, and Br.

The polyanionic compound may also be a class of compounds having sodium ions, tetrahedral (YO₄)ⁿ⁻ anion units, polyhedral units (ZO_{y})^{m+}, and optionally halogen anions. Y at least includes at least one of P, S, and Si, and n represents the valence state of (YO₄)ⁿ⁻; Z represents a transition metal and at least includes at least one of Mn, Fe, Ni, Co, Cr, Cu, Ti, Zn, V, Zr, and Ce, and m represents the valence state of (ZO_{y})^{m+}; the halogen may be at least one of F, Cl, and Br.

The polyanionic compound is, for example, at least one of NaFePO₄, Na₃V₂(PO₄)₃ (sodium vanadium phosphate, referred to as NVP), Na4Fe₃(PO₄)₂(P₂O₇), NaM'PO₄F (M' is one or more of V, Fe, Mn, and Ni), and Na₃(VO_{y})₂(PO₄)₂F_{(3-2y)} (0 ≤ y ≤ 1).

The Prussian blue compound may be a class of compounds having sodium ions, transition metal ions, and cyanide ions (CN⁻). The transition metal at least includes at least one of Mn, Fe, Ni, Co, Cr, Cu, Ti, Zn, V, Zr, and Ce. The Prussian blue compound is, for example, NaaMebMe'c(CN)₆, where Me and Me' each independently include at least one of Ni, Cu, Fe, Mn, Co, and Zn, 0 < a ≤ 2, 0 < b < 1, and 0 < c < 1.

The weight ratio of the positive electrode active material in the positive electrode active layer is 80 wt% to 100 wt% based on the total weight of the positive electrode active layer.

In any embodiment of the present application, the components of the positive electrode active layer further include a positive electrode conductive agent and a positive electrode binder.

The positive electrode conductive agent may be any conductive agent commonly used in the art, including but not limited to at least one of graphite, carbon nanotubes, nanofibers, carbon black, and graphene. Specifically, the conductive agent may be selected from at least one of SP, KS-6, acetylene black, branched Ketjen black ECP, SFG-6, vapor grown carbon fiber VGCF, carbon nanotubes CNTs, graphene, and a composite conductive agent thereof.

The weight ratio of the positive electrode conductive agent in the positive electrode active layer is 0 wt% to 20 wt% based on the total weight of the positive electrode active layer.

In any embodiment of the present application, the binder of the positive electrode binder described above may be at least one of polyvinylidene difluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, hydrogenated nitrile-butadiene rubber, styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS), and fluorinated acrylate resin.

The weight ratio of the positive electrode binder in the positive electrode active layer is 0 wt% to 30 wt% based on the total weight of the positive electrode active layer.

In any embodiment of the present application, the positive electrode plate may be prepared by the following steps: dispersing the components described above for preparing the positive electrode plate in a solvent (e.g., *N*-methylpyrrolidone) to form a positive electrode slurry; and coating a current collector with the positive slurry, and performing drying, cold pressing and other processes, such that the positive electrode plate can be obtained. The solid content of the positive electrode slurry is 40 wt% to 80 wt%, and the viscosity at room temperature is adjusted to 5000 mPa·s to 25,000 mPa·s. The surface of the positive electrode current collector is coated with the positive electrode slurry, and drying and cold pressing through a cold rolling mill are performed to form a positive electrode plate. The unit coating surface density of the positive electrode powder is 15 mg/cm² to 35 mg/cm², and the compaction density of the positive electrode plate is 3.0 g/cm³ to 3.6 g/cm³, and optionally 3.3 g/cm³ to 3.5 g/cm³. The calculation formula of the compaction density is as follows: compaction density = coating surface density/(electrode plate thickness after extrusion - current collector thickness).

### [Electrolytic solution]

The electrolytic solution includes an electrolyte salt and a solvent.

In some embodiments, the electrolyte salt may be selected from electrolyte salts commonly used in the art, e.g., a lithium ion electrolyte salt.

As an example, the lithium ion electrolyte salt includes, but is not limited to, one or more of lithium hexafluorophosphate (LiPF6), lithium tetrafluoroborate (LiBF4), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluorobis(oxalato)phosphate (LiDFOP), and lithium tetrafluoro(oxalato)phosphate (LiTFOP).

In some embodiments, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the concentration of the electrolyte salt in the electrolytic solution is generally 0.5 mol/L to 15 mol/L.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery, and an additive for improving the high- or low-temperature performance of the battery.

### [Separator]

The separator is disposed between the positive electrode plate and the negative electrode plate.

The present application does not particularly limit the type of the separator, and any porous-structure separator known to have good chemical stability and mechanical stability may be selected and used.

In some embodiments, the separator may be made of a material selected from at least one of glass fiber, non-woven fabric, polyethylene, polypropylene, and polyvinylidene difluoride. The separator may be a single-layer film or a multi-layer composite film, with no particular limitation imposed. When the separator is a multi-layer composite film, the materials of the layers may be the same or different, with no particular limitation imposed.

The thickness of the separator is controlled to be 2 µm to 15 µm; optionally, the thickness of the separator is controlled to be 2 µm to 13 µm.

In some embodiments, the battery described above is a secondary battery; specifically, the battery is a lithium ion battery.

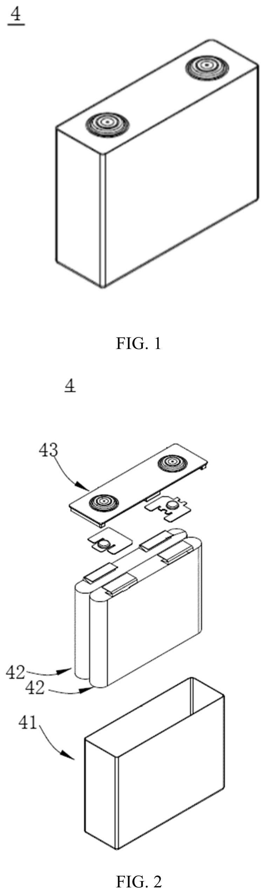

The present application does not particularly limit the shape of the battery, and the battery may have a cylindrical shape, a prismatic shape, or any other shape. For example, FIG. 1 shows a battery 4 having a prismatic structure as one example.

In some embodiments, referring to FIG. 2, the shell may include a housing 41 and a cover plate 43. The housing 41 may include a bottom plate and a side plate connected to the bottom plate, and the bottom plate and the side plate define, in an enclosing manner, an accommodating cavity. The housing 41 is provided with an opening in communication with the accommodating cavity, and the cover plate 43 is capable of lidding the opening to close the accommodating cavity.

The positive electrode plate, the negative electrode plate, and the separator may be subjected to a winding process or a stacking process to form an electrode assembly 42. The electrode assembly 42 is packaged in the accommodating cavity. The electrolytic solution is infiltrated into the electrode assembly 42. The number of electrode assemblies 42 included in the battery 4 may be one or more and may be adjusted as needed.

The present application further provides an electric device, which includes the battery described above.

Further, in the electric device described above, the battery may be in the form of a battery cell, or may be in the form of a battery pack assembled further.

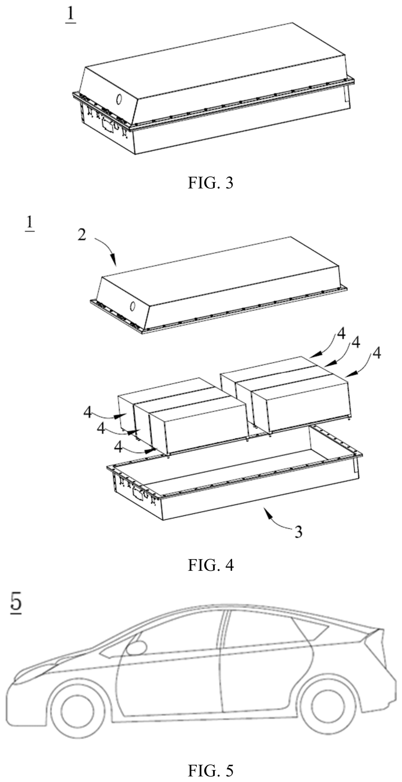

FIG. 3 and FIG. 4 show a battery pack 1 as one example. The battery pack 1 includes a battery case and one or a plurality of batteries 4 disposed in the battery case. The battery case includes an upper case body 2 and a lower case body 3. The upper case body 2 is capable of lidding the lower case body 3 to form a closed space for the batteries 4.

The plurality of batteries 4 may be disposed in any manner in the battery case.

The batteries described above or the battery pack assembled therefrom may be used as a power source for the electric device and may also be used as an energy storage unit for the electric device.

The electric device described above may be, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

FIG. 5 shows an electric device 5 as one example. The electric device 5 is a pure electric vehicle, a hybrid electric vehicle, a plug-in hybrid electric vehicle, or the like. To meet the requirements of the electric device 5 for high power and high energy density of the battery, the battery pack may be used.

As another example, the electric device may be a mobile phone, a tablet computer, a notebook computer, or the like. The device is generally required to be light and thin, and thus a battery may be used as a power source.

The present application will be described below in conjunction with specific embodiments. However, the present application is not limited to the following embodiments. It should be understood that the appended claims encompass the scope of the present application, and under the guidance of the concept of the present application, those skilled in the art should recognize that certain changes of the embodiments of the present application shall fall within the spirit and scope of the present application.

The specific embodiments are as follows.

### Example 1

### (1) Preparation of negative electrode plate

### S1: Preparation of current collector:

An electroplating solution was prepared. The solvent of the electroplating solution was water, and the solute included CuSO₄, H₂SO₄, and a surfactant polyethylene glycol. The concentration of CuSO₄ was 0.7 mol/L, the concentration of H₂SO₄ was 1.5 mol/L, and the concentration of the surfactant polyethylene glycol was 115 mg/L.

Then, a titanium alloy was used as a cathode roller and a copper foil was used as an anode, both of which were placed in the electroplating solution. The power supply was turned on, and deposition was performed for 30 s at a deposition current of 0.25 A/cm² to obtain the titanium alloy with the copper layer deposited on the surface. Then, the copper layer deposited on the surface of the titanium alloy was peeled off, washed, and dried to obtain a Cu current collector.

The thickness of the current collector was measured to be 8 µm using a micrometer caliper. The surface roughness Ra of the Cu current collector was tested by referring to "Measuring Method of Surface Roughness, Peak Count and Waviness for Cold-Rolled Metal Sheet and Strip" (GB/T 2523-2022). The specific data are shown in Table 1.

The tensile strength of the prepared current collector was tested by using the following steps:
Firstly, a current collector to be tested was cut into a sample with a length L ≥ 75 mm and a width b of 12.5 mm. Then, both ends of the sample were clamped by chucks with smooth clamping surfaces of a tensile testing machine, during which the axis of the sample was ensured to be in line with the center line of the chucks of the testing machine. Finally, the sample was pulled at a low speed of 1 mm/min, and the load varying with displacement was recorded until the sample was pulled apart. The maximum force reached during the test was recorded. The maximum tensile force was divided by the original cross-sectional area of the sample, such that the tensile strength was obtained, which was denoted as Ma. The specific parameters are shown in Table 1.

S2: A silicon-based active material (silicon-carbon composite material SOP500), a carbon-based active material (graphite), a binder (styrene-butadiene rubber (SBR)), a thickener (sodium carboxymethylcellulose (CMC)), and a conductive agent (acetylene black) were mixed at a mass ratio of 86:9:2.5:2.5:10, then a solvent (deionized water) was added, and the mixture was stirred uniformly by a vacuum mixer to obtain a negative electrode slurry. Then, one surface of a negative electrode current collector (copper foil) was uniformly coated with the negative electrode slurry, and drying was performed to form a negative electrode active layer.

The volume average particle size of the negative electrode active material was tested by using a laser method, specifically referring to "Particle Size Analysis - Laser Diffraction Methods" (GB/T 19077-2016/ISO 13320:2009) and using a Mastersizer 2000E laser particle size analyzer from Malvern Panalytical Ltd. (UK).

S3: The same coating process as that in S1 was performed on the other surface of the copper foil, and then cold pressing, die cutting, and slitting were performed to obtain a negative electrode plate.

### S4: Test:

1. The negative electrode plate was soaked in water. After the coating on the electrode plate peeled off, the copper foil was removed, and the water solution was filtered. The residue was taken and burned under an oxygen atmosphere with an acetylene flame at a temperature of 600-800 °C. The residue after burning was a negative electrode active material powder, which was taken for a particle size test. The specific test method for the particle size parameters was found in "Particle Size Analysis - Laser Diffraction Methods" (GB/T 19077-2016/ISO 13320:2009), and the volume average particle size D of the negative electrode active material was obtained through the test. The specific parameters are shown in Table 1.

The volume average particle size D of the negative electrode active material obtained by the test almost overlapped with the average particle size tested when the negative electrode active material was in the raw material state, and either could be selected as the average particle size of the negative electrode active material in the negative electrode plate. The volume average particle size D tested in step S4 was selected herein.

In the negative electrode active layer, the proportion of the silicon-based active material in the negative electrode active material was denoted as K.

2. The thickness of the active layer in the negative electrode plate was tested and a method known in the art was selected for the test. Specifically, the thicknesses of the electrode plate and the current collector were measured by a micrometer caliper, and the difference value between the two was calculated, such that the thickness of the active layer was obtained. The specific data are shown in Table 1. The specific process was as follows:
Firstly, the thickness A1 of the electrode plate prepared in step S2 was tested. The thickness H1 of the negative electrode active layer = A1 - the thickness of the current collector.

3. The adhesive force of the negative electrode plate was tested by using the following steps:
The adhesive force of the electrode plate film layer and the current collector was tested by a peel strength testing machine. The electrode plate to be tested was taken and was cut with a blade to obtain a sample with a width of 30 mm and a length of 160 mm. Then, a special double-sided adhesive tape with a width of 20 mm and a length of 150 mm was pasted on a steel plate, and the cut electrode plate sample was pasted on the double-sided adhesive tape with the test surface facing down. After that, the sample was rolled three times in the same direction using a compression roller, and a paper tape with a width equal to that of the electrode plate and a length greater than that of the sample by 200 mm was inserted below the electrode plate, and fixed using a crepe adhesive tape. The sample was placed on a 180° peeling fixture, and the electrode plate to be tested was clamped by chucks. The material testing machine was manually controlled until the adhesive tape was just taut. The test started with a separation rate of 50 mm/min for the chucks. The negative electrode film layer was gradually peeled off under the action of tensile force. The coating peeling force F (unit: N) was read from the tensile force value-displacement curve formed on the software program. The adhesive force of the coating was calculated by the formula: adhesive force = F/W, where W represents the width of the film layer. The specific results are shown in Table 1.

### (2) Preparation of positive electrode plate

A positive electrode active material (lithium nickel cobalt manganese oxide (NCM333)), a conductive agent (acetylene black) and a binder (polyvinylidene difluoride (PVDF)) were mixed at a mass ratio of 94:3:3, then a solvent (*N*-methylpyrrolidone (NMP)) was added, and the mixture was stirred by a vacuum stirrer until the uniform system was present to obtain a positive electrode slurry. Both surfaces of a positive electrode current collector (aluminum foil) with a thickness of 12 µm were uniformly coated with the positive electrode slurry, and drying was performed at 115 °C for 15 min, followed by cold pressing to obtain a positive electrode active layer with a thickness of 84 µm on one side. The surface density of the positive electrode active layer on one side is 20 mg/cm², and the compaction density is 2.4 g/cm³.

(3) Preparation of electrolytic solution: The organic solvent was a mixed solution of ethylene carbonate (EC), ethyl methyl carbonate (EMC) and diethyl carbonate (DEC), where the volume ratio of EC, EMC, and DEC was 20:20:60. In an argon atmosphere glove box with a water content of < 10 ppm, fully dried LiPF₆ was dissolved in an organic solvent, and the solution was uniformly mixed to obtain the electrolytic solution, where the concentration of LiPF₆ was 1 mol/L.

(4) Separator: A polyethylene microporous film was used as a porous separator substrate. An inorganic aluminum trioxide powder, polyvinylpyrrolidone, and an acetone solvent were mixed uniformly at a weight ratio of 3:1.5:5.5 to prepare a slurry. One surface of the substrate was coated with the slurry, and drying was performed to obtain the separator.

(5) Preparation of lithium ion battery: The positive electrode plate, the negative electrode plate, and the separator described above were wound to obtain a bare battery cell, and then packaging, electrolytic solution injection, formation, degassing, and other processes were performed to obtain the lithium ion battery.

### (6) Performance test of lithium ion battery:

1. The stability of the negative electrode plate was tested by using the following steps:
The battery cell was charged to a cut-off voltage of 4.25 V at a rate of 0.33 C, and then subjected to constant-voltage charging until the current dropped to a current corresponding to a rate of 0.05 C, at which time the charging was stopped, such that a fully charged battery cell was obtained. Then, the fully charged battery cell was disassembled to obtain a fully charged negative electrode plate, such that whether the active material film layer on the electrode plate had separated from the surface of the current collector was observed. The specific parameters are shown in Table 1.

2. The cycle performance of the battery was tested as follows:
At 25 °C, the battery cell was subjected to constant-current charging to 4.25 V at a rate of 0.33 C, and then subjected to constant-voltage charging until the current dropped to a current corresponding to a rate of 0.05 C, at which time the charging was stopped. Then, the battery cell was subjected to constant-current discharging to 2.5V at a rate of 0.33 C, at which time the discharging was stopped and the cycle number was recorded as 1.

The charging and discharging cycles described above were repeated until the battery capacity was reduced to 80% of the initial capacity, at which time the test was stopped and the cycle number m@80% of the lithium ion battery was recorded. The test results are shown in Table 1.

### Examples 2 to 7

Examples 2 to 7 were substantially the same as Example 1, except that in step S1, the concentration of CuSO₄ and the concentration of the surfactant in the electroplating solution were regulated to regulate the surface roughness of the obtained copper foil; in the preparation of the negative electrode plate in step S2, the mass proportion of the silicon-based material in the negative electrode active material was regulated while the total mass proportion of the negative electrode material was kept unchanged, and the negative electrode active material was sieved to regulate the volume average particle size of the negative electrode active material or regulate the thickness of the active layer.

The other steps and conditions were the same as those in Example 1. The test results are shown in Table 1.

### Examples 8 to 10

Examples 8 to 10 were substantially the same as Example 5, except that in the preparation of the negative electrode plate in step S2, the negative electrode active material was sieved to regulate the volume average particle size of the negative electrode active material.

The other steps and conditions were the same as those in Example 1. The test results are shown in Table 1.

### Examples 11 to 15

Examples 11 to 15 were substantially the same as Example 1, except that in step S2, the negative electrode active material was completely replaced with the carbon-based active material while the total proportion of the negative electrode active material was kept the same as that in Example 1, and the negative electrode active material was sieved to regulate the volume average particle size of the negative electrode active material and the thickness of the active layer. The specific parameters are shown in Table 1.

The other steps and conditions were the same as those in Example 1. The test results are shown in Table 1.

### Comparative Example 1

Comparative Example 1 was substantially the same as Example 5, except that the current collector was not subjected to roughening treatment, and the negative electrode active material was sieved to regulate the volume average particle size of the negative electrode active material. The specific parameters are shown in Table 1.

The other steps and conditions were the same as those in Example 1. The test results are shown in Table 1.

### Comparative Example 2

Comparative Example 2 was substantially the same as Example 1 except that the negative electrode active material was sieved to regulate the volume average particle size of the negative electrode active material. The specific parameters are shown in Table 1.

The other steps and conditions were the same as those in Example 1. The test results are shown in Table 1.

The relevant parameters and performance results for all the examples and comparative examples are shown in Table 1. The surface roughness of the current collector is recorded as Ra, the tensile strength is recorded as Ma, the volume average particle size of the negative electrode active material in the active layer of the negative electrode plate is recorded as D, the proportion of the silicon-based active material in the negative electrode active material is recorded as K, the thickness of the active layer is recorded as H1, the adhesive force of the negative electrode plate is recorded as N, and m@80% represents the cycle number of the battery.

**Table 1**

| Negative electrode plate | | | | | | | | | Battery |
|---|---|---|---|---|---|---|---|---|---|
| | Current collector | | Negative electrode active layer | | | | Adhesive strength (N/m) | Fully charged electrode plate Whether the film has separated or not | m@80% (circle) |
| | Rₐ(µm) | Ma(MPa) | D(µm) | Ra/D | K(%) | H1 (µm) | | | |
| Example 1 | 1.8 | 400 | 4 | 0.45 | 50% | 40 | 35 | No | 720 |
| Example 2 | 1.5 | 450 | 3 | 0.5 | 75% | 30 | 32 | No | 648 |
| Example 3 | 2.5 | 380 | 6 | 0.417 | 80% | 28 | 30 | No | 567 |
| Example 4 | 3 | 360 | 3 | 1 | 50% | 40 | 43 | No | 803 |
| Example 5 | 3 | 360 | 5 | 0.6 | 100% | 25 | 28 | No | 405 |
| Example 6 | 3 | 360 | 15 | 0.2 | 50% | 40 | 20 | No | 612 |
| Example 7 | 3 | 360 | 5 | 0.6 | 50% | 40 | 38 | No | 792 |
| Example 8 | 2.5 | 380 | 8 | 0.31 | 100% | 25 | 15 | No | 140 |
| Example 9 | 3 | 360 | 3 | 1 | 100% | 25 | 33 | No | 450 |
| Example 10 | 3 | 360 | 6 | 0.5 | 100% | 25 | 26 | No | 360 |
| Example 11 | 3 | 360 | 15 | 0.2 | 0 | 120 | 17 | No | 1350 |
| Example 12 | 3 | 360 | 20 | 0.15 | 0 | 120 | 14 | No | 1170 |
| Example 13 | 2.5 | 380 | 8 | 0.31 | 0 | 120 | 20 | No | 1620 |
| Example 14 | 3 | 360 | 7.5 | 0.4 | 0 | 120 | 25 | No | 1630 |
| Example 15 | 0.5 | 420 | 2 | 0.25 | 0 | 120 | 18 | No | 1485 |
| Comparative Example 1 | 0.2 | 430 | 15 | 0.13 | 100% | 25 | 10 | Yes | 107 |
| Comparative Example 2 | 1.8 | 400 | 18 | 0.1 | 50% | 40 | 12 | Yes | 350 |

The data in Table 1 were analyzed, and the data of the examples were compared with those of Comparative Examples 1 to 2. Example 1 and Comparative Example 2 were both performed in the same active material system: a mixed system of the silicon-based active material and the carbon-based active material, with all other conditions kept the same. In Comparative Example 2, only the volume average particle size of the negative electrode active material and the ratio of the volume average particle size to the surface roughness of the current collector were changed. The experimental results of comparing Example 1 with Comparative Example 2 showed that compared with Comparative Example 2, the adhesive strength of the electrode plate of Example 1 was greatly enhanced, and the cycle performance was also significantly improved. Similarly, Examples 8 to 10 and Comparative Example 1 were all performed in the same active material system: the silicon-based active material, with other conditions kept the same. In Comparative Example 1, only the volume average particle size of the negative electrode active material and the ratio of the volume average particle size to the surface roughness of the current collector were changed. The experimental results of comparing Examples 8 to 10 with Comparative Example 1 showed that compared with Comparative Example 1, the adhesive strength of the electrode plate of Examples 8-10 was greatly increased, and the cycle performance was also significantly improved.

Based on the above analysis of the results, it can be seen that in the present application, by coordinately regulating the volume average particle size of the active material, the volume average particle size of the negative electrode active material and the surface roughness of the current collector are enabled to satisfy a certain relationship, such that the adhesive force of the battery electrode plate may be enhanced, and the probability that the active layer is separated from the surface of the current collector during the charging and discharging processes of the electrode plate may be reduced, thereby improving the cycle performance of the battery.

Further, the adhesive force of the battery electrode plate is enhanced, which enables the battery electrode plate to maintain relatively high adhesive force even in a negative electrode active material system including a full silicon-based active material, and can reduce the probability that the active layer is separated from the surface of the current collector during the charging and discharging processes of the electrode plate, thereby improving the cycle performance of the battery.

The technical features of the examples described above may be combined in any manner. For brevity, not all possible combinations of the technical features in the above examples are described. However, as long as no contradiction exists in the combinations of the technical features, such combinations should be considered to be within the scope of the specification.

The examples described above only represent several embodiments of the present application. Although the descriptions of these examples are relatively specific and detailed, they should not be construed as limiting the patent scope of the present disclosure. It should be noted that various changes and modifications can be made by those skilled in the art without departing from the concept of the present application, and these changes and modifications all shall fall within the protection scope of the present application. Therefore, the protection scope of the patent in the present application shall be subjected to the appended claims, and the description and drawings can be used to explain the contents of the claims.

## Claims

1. A battery electrode plate, comprising a current collector and an active layer disposed on a surface of the current collector, wherein components of the active layer comprise an active material, a volume average particle size of the active material is D µm, a surface roughness Ra of the current collector is greater than or equal to 0.5 µm, and a relationship of Ra/D ≥ 0.15 is satisfied.

2. The battery electrode plate according to claim 1, wherein 0.15 ≤ Ra/D ≤ 1; optionally, 0.2 ≤ Ra/D ≤ 1.

3. The battery electrode plate according to claim 1, wherein Ra satisfies a relationship of *0.5* µm ≤ Ra ≤ 3 µm;
optionally, Ra satisfies a relationship of 1.5 µm ≤ Ra ≤ 3 µm.

4. The battery electrode plate according to any one of claims 1 to 3, wherein D satisfies a relationship of 2 ≤ D ≤ 20;
optionally, 3 ≤ D ≤ 15.

5. The battery electrode plate according to any one of claims 1 to 4, wherein the battery electrode plate is a negative electrode plate, and the active material comprises at least one of a silicon-based active material and a carbon-based active material.

6. The battery electrode plate according to any one of claims 1 to 5, wherein the battery electrode plate satisfies any one of the following conditions (1) to (3):
(1) the active material is a carbon-based active material, and Ra/D satisfies a relationship of 0.15 ≤ Ra/D ≤ 0.4;
optionally, the active material is a carbon-based active material, and Ra/D satisfies a relationship of 0.2 ≤ Ra/D ≤ 0.4;
(2) the active material is a silicon-based active material, and Ra/D satisfies a relationship of 0.3 ≤ Ra/D ≤ 1;
optionally, the active material is a silicon-based active material, and Ra/D satisfies a relationship of 0.5 ≤ Ra/D ≤ 1;
(3) the active material comprises a carbon-based active material and a carbon-based material, and Ra/D satisfies a relationship of 0.4 ≤ Ra/D ≤ 1.

7. The battery electrode plate according to any one of claims 1 to 6, wherein the active layer is in direct contact with the surface of the current collector.

8. The battery electrode plate according to any one of claims 1 to 7, wherein the active layer satisfies at least one of the following conditions (1) to (3):
(1) in the active layer, a mass proportion of the active material is 80% to 95%;
(2) the components of the active layer further comprise a conductive agent;
optionally, in the active layer, a mass proportion of the conductive agent is 2% to 10%;
(3) the components of the active layer further comprise a binder;
optionally, in the active layer, a mass proportion of the binder is 2% to 10%.

9. The battery electrode plate according to any one of claims 1 to 8, wherein a tensile strength of the current collector is greater than 350 MPa;
optionally, a tensile strength of the current collector is 360 MPa to 450 MPa.

10. A preparation method for a battery electrode plate, comprising the following steps:
providing a current collector and an active slurry, wherein components of the active slurry comprise an active material, a volume average particle size of the active materials is D µm, a surface roughness Ra of the current collector is greater than or equal to 0.5 µm, and a relationship of Ra/D ≥ 0.15 is satisfied; and
coating a surface of the current collector with the active slurry to prepare the battery electrode plate.

11. The preparation method for a battery electrode plate according to claim 10, wherein a preparation method for the current collector comprises the following steps:
performing roughening treatment on a current collector matrix to prepare the current collector;
optionally, the roughening treatment is performed by any one of an electrodeposition method, an etching method, or a dealloying method.

12. A battery, comprising the battery electrode plate according to any one of claims 1 to 9 or a battery electrode plate prepared by the preparation method for a battery electrode according to any one of claims 10 to 11.

13. An electric device, comprising the battery according to claim 11.
